# EUROPÄISCHE PATENTSCHRIFT

(11) **EP 1 318 885 B1**
(45) Veröffentlichungstag und Bekanntmachung des Hinweises auf die Patenterteilung: **08.06.2005**
(21) Anmeldenummer: 01980424.4
(22) Anmeldetag: 21.09.2001
(51) Int. Cl.: B23B 27/16

(54) **ZERSPANUNGSWERKZEUG**
CHIP REMOVING TOOL
OUTIL D'ENLEVEMENT DE COPEAUX

(30) Priorität: 22.09.2000 DE 10047079
(43) Veröffentlichungstag der Anmeldung: 18.06.2003
(73) Patentinhaber: KENNAMETAL INC., Latrobe, PA 15650-0231 (US)
(72) Erfinder: JÄGER, Horst, 90451 Nürnberg (DE); ZEUG, Berthold, 90762 Fürth (DE)
(74) Vertreter: Tergau & Pohl Patentanwälte
(86) Internationale Anmeldenummer: PCT/EP2001/010945
(87) Internationale Veröffentlichungsnummer: WO 2002/024387

(56) Entgegenhaltungen:
- DE-A- 2 527 413
- FR-A- 1 249 497

## Beschreibung

Die Erfindung betrifft ein insbesondere als Rundlaufwerkzeug ausgebildetes Zerspanungswerkzeug mit einem Werkzeugschaft als Träger eines in Form einer Lochplatte ausgebildeten Schneideinsatzes, insbesondere einer Lochwendeplatte, sowie mit einer quer zur Lochachse auf die Lochplatte wirksamen Zustelleinrichtung als Verstellmittel für die Positionierung der Lochplatte am Werkzeugschaft. Zur Befestigung solcher Lochplatten, insbesondere Lochwendeplatten hat sich zunehmend eine einfache Schraubspannung durchgesetzt. Hierbei dient die Schraube zur Befestigung der Lochplatte am Werkzeugschaft. Die genaue Positionierung der Lochplatte am Werkzeugschaft wird dabei durch ein die seitlichen Anlageflächen der Lochplatte beaufschlagendes Verstellmittel bewirkt, welches einen Positionsversatz zwischen Gewindebohrung und Schraubenkopf der Befestigungsschraube erzeugt. Ein derartiges Verstellmittel ist z.B. aus DE 197 17 741 A1 bekannt.

Eine solche quer etwa rechtwinklig zur Lochachse verstellbare Fixierung einer Lochplatte am Werkzeuggrundkörper bzw. am Werkzeugschaft ist zwar kostengünstig realisierbar. Es müssen indessen die Toleranzen zwischen den Anlageflächen und der Gewindebohrung in engen Grenzen gehalten werden, damit die Schraube beim Zustellen nicht überbelastet wird. Andererseits beschränken die Toleranzen der Lochplattenbreite und die Position der Anlageflächen im Plattensitz des Werkzeugschaftes die Bearbeitungstoleranzen des Zerspanungswerkzeuges und das ist bei einem Bohrwerkzeug besonders die Bohrungstoleranz.

Die Weiterentwicklung der Zerspanungstechnologie erfordert die Einhaltung immer engerer Bohrungstoleranzen. Darauf gerichtete Werkzeugentwicklungen lassen sich indessen nur eingeschränkt mit der vorteilhaften Schraubenspannung einer Lochplatte kombinieren. Mit zunehmendem Stellweg wird nämlich die Schraube zunehmend biegebelastet. Diese Biegebelastung stellt ein Sicherheitsrisiko dar, welches neben der Beschädigung von Werkzeug, Werkstück und Maschine auch das Bedienungspersonal gefährdet. EP 0 552 774 B1 beschreibt als einen Lösungsweg eine schlittenartige Halterung von Lochplatten mit einem beliebigen Zustellweg am Werkzeugschaft. Diese Lösung schwächt indessen den Unterbau des Lochplattensitzes und deformiert den Unterbau beim Spannen der Lochplatte.

Der Erfindung liegt die Aufgabe zugrunde, ein Zerspanungswerkzeug der genannten Art zu schaffen, welches eine Überbeanspruchung der Schraubverbindung auch bei einem größeren Zustellweg in anderer Weise vermeidet. Diese Aufgabe wird durch Anspruch 1 gelöst. Anstelle eines unmittelbar im Werkzeugschaft angebrachten Muttergewindes oder anstelle einer verschieblich geführten schlittenartigen Halterung des Muttergewindes arbeitet diese Lösung mit einer im Werkzeugschaft unterhalb des Plattensitzes gewissermaßen schwimmend gelagerten Gegenhaltemutter. Die dadurch erzeugte schwimmende Lagerung der Einheit von Mutter und eingeschraubter Schraube, welche Einheit das Schraubverspannungsmittel insgesamt bildet, ermöglicht eine selbsttätige Anpassung der Positionierung und der Ausrichtung der Schraubgewindeachse relativ zur Plattenlochachse und zur Achse des Durchgangsloches im Werkzeugschaft. Die Zustellbewegung, die auch eine teilweise Schwenkung und/oder Drehung ermöglicht, erfolgt etwa in einer Ebene, welche durch die auch hinsichtlich ihrer Ausrichtung veränderbare Schraubgewindeachse und durch die quer zu ihr weisende Zustellrichtung aufgespannt wird.

Eine Weiterentwicklung des Erfindungsgegenstandes sieht eine Federung der Positionierung des Gegenhalters in und/oder entgegen der Zustellrichtung vor. Wird die verstellbare seitliche Anlagefläche in Richtung der Lochplatte verschoben, so folgt die Gegenhaltemutter entgegen dem Federdruck der Zustellbewegung. Dadurch wird einer zusätzlichen, auf der Zustellbewegung beruhenden Biegebelastung der Schraube entgegengewirkt. Bei Rückstellung der Anlagefläche und bei einem Wechseln der Lochplatte erfolgt dadurch eine selbsttätige Rückstellung bzw. Rückschwenkung der Gegenhaltemutter in ihre Ausgangsstellung.

Der Erfindungsgegenstand wird anhand eines in den Figuren dargestellten Ausführungsbeispiels näher erläutert. Es zeigen:
- Fig.1: eine perspektivische Explosionsansicht des Werkzeugschaftes mit seinem Plattensitz für das Zerspanungswerkzeug,
- Fig. 2: eine perspektivische Ansicht der Gegenhaltemutter für die Spannschraube,
- Fig. 3: die perspektivische Frontansicht eines Rundlaufwerkzeuges mit einer erfindungsgemäß fixierten Lochplatte,
- Fig. 4: einen Längsschnitt entsprechend der Schnittlinie IV-IV in Fig. 3 im Ausgangszustand der Lochplattenspannung ohne einen quer zur Lochachse auf die Lochplatte gerichteten Zustelldruck,
- Fig. 5: eine Schnittdarstellung analog Fig. 4 mit in Zustellrichtung erfolgter Verstellung der Lochplatte,
- Fig. 5a: ein Vektordiagramm zur Verdeutlichung der Spannungsverhältnisse in unterschiedlichen Verstellpositionen der Schraube und der mit ihr zusammenwirkenden Gegenhaltemutter,

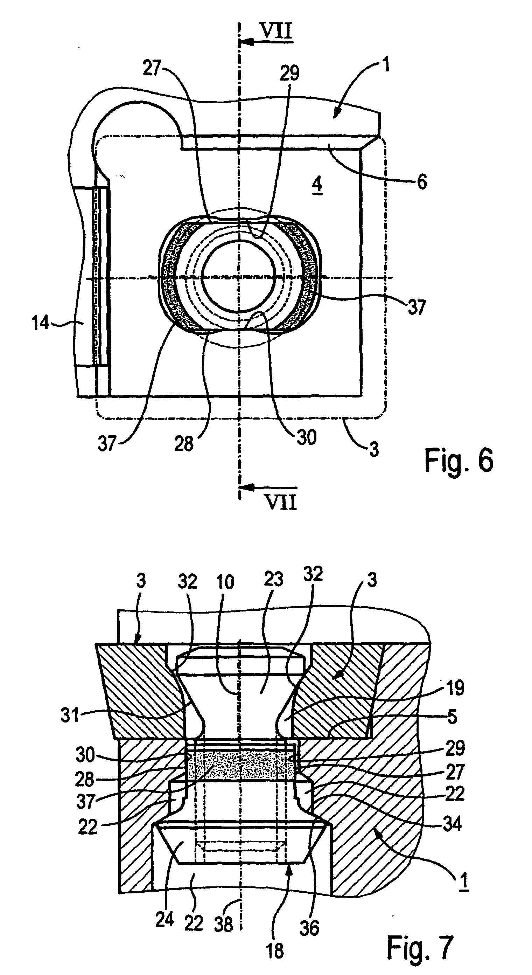

- Fig. 6: bei entfernter Lochplatte und entfernter Schraube eine Draufsicht nur auf den Plattensitz des Werkzeuggrundkörpers mit unterhalb des Durchgangsloches positionierter Gegenhaltemutter entsprechend der Blickrichtung VI in Fig. 4,
- Fig. 7: eine Schnittdarstellung entsprechend der Linie VII-VII in Fig. 6, jedoch mit analog Fig. 5 in der Schaftausnehmung gespannt einliegender Lochplatte.

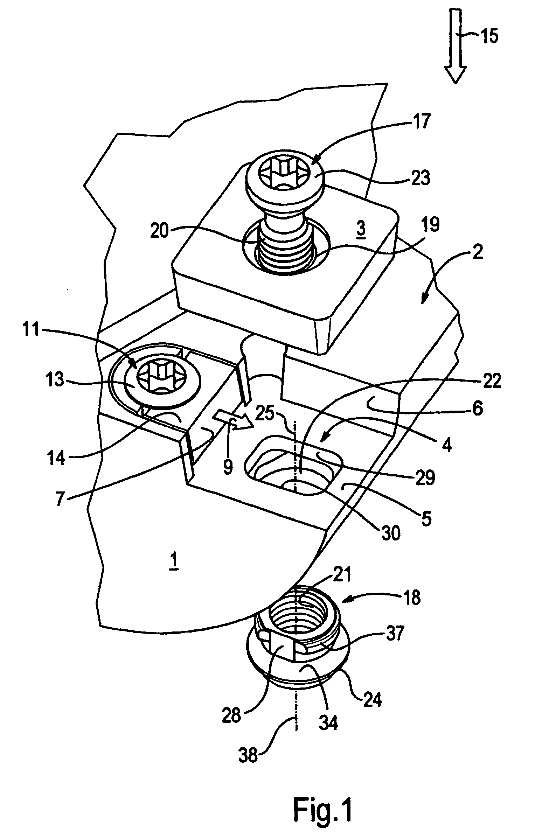

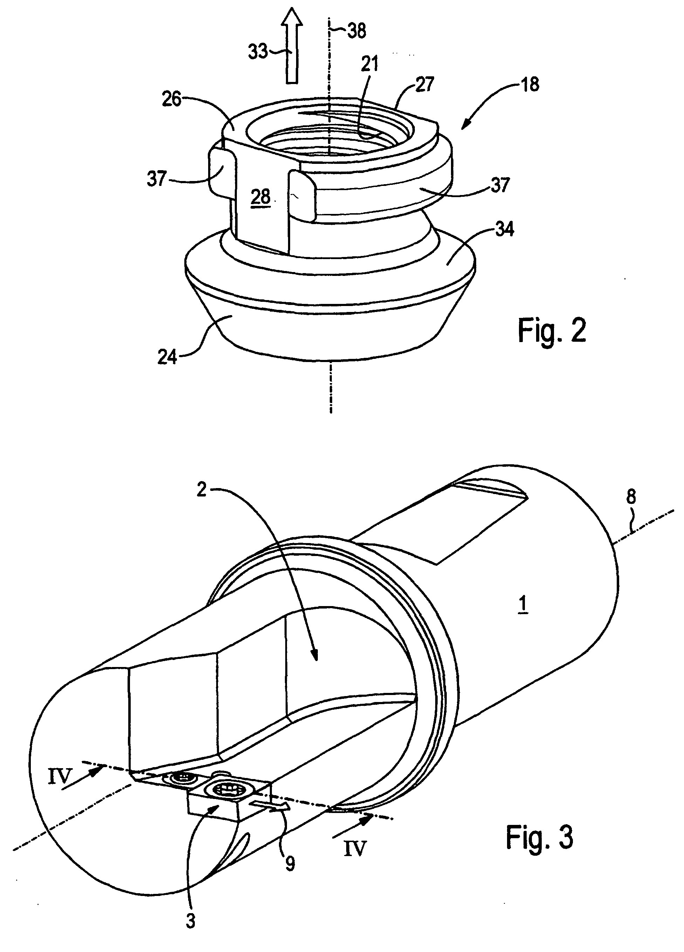

Das Bohrwerkzeug (Fig. 3) enthält im Wesentlichen den Werkzeugschaft 1 und darin gespannt eine Lochplatte 3 aus Hartmetall oder Oxidkeramik. Die Lochplatte 3 ist innerhalb des in einer Schaftausnehmung 2 vorgesehenen Plattensitzes 4 am Werkzeugschaft 1 verspannt (Fig. 1). Der Plattensitz 4 enthält eine Auflagefläche 5 und zwei seitliche Anlageflächen 6,7 für die genaue Positionierung der Lochplatte 3. Die seitliche Anlagefläche 6 verläuft dabei etwa lotrecht und die seitliche Anlagefläche 7 verläuft etwa parallel zur Rotationsachse 8 des Werkzeugschaftes 1.

Die zur Rotationsachse 8 etwa parallele seitliche Anlagefläche 7 ist in Zustellrichtung 9 gegenüber dem Werkzeugschaft 1 verstellbar. Die Zustellrichtung 9 verläuft etwa lotrecht zur Rotationsachse 8 des Werkzeugschaftes 1 und zur Lochachse 10 der Lochplatte 3. Durch die Zustellung wird vornehmlich die Radialstellung der Lochplatte 3 innerhalb ihres Plattensitzes 4 positioniert.

Die Lageveränderung der Lochplatte 3 bezüglich ihrer seitlichen Anlagefläche 7 in Zustellrichtung 9 erfolgt durch eine Zustelleinrichtung 11, deren konstruktiver Aufbau und funktionelle Wirkung etwa dem Gegenstand von DE 197 17 741 A1 entspricht. Auf deren Offenbarungsinhalt wird zur Vermeidung unnötiger Ausführungen verwiesen. Für das Verständnis der vorliegenden Erfindung reicht eine kurze Erläuterung der Funktionsweise der Zustelleinrichtung 11 aus.

Wesentliches Funktionsteil der Zustelleinrichtung 11 ist ein Schraubzapfen 13 mit an seinem oberen Ende einem Stellkegelkopf 12. Mit diesem Stellkegelkopf 12 ist der Schraubzapfen 13 in den Werkzeugschaft 1 einschraubbar. Bei seiner Einschraubbewegung verdrängt der Stellkegelkopf 12 eine Stellzunge 14 der Zustelleinrichtung 11 in Zustellrichtung 9. Die dem Stellkegelkopf 12 abgewandte Flanke der Stellzunge 14 bildet die verstellbare seitliche Anlagefläche 7 der Zustelleinrichtung 11. Das Einschrauben des Schraubzapfens 13 in die Zustelleinrichtung 11 bewirkt also die Bewegung der Stellzunge 14 mit deren seitlicher Anlagefläche 7 in Zustellrichtung 9 gegen die Lochplatte 3.

Die Fixierung der Lochplatte 3 innerhalb des Plattensitzes 4, nämlich ihre Verspannung in Spannrichtung 15 gegen die Auflagefläche 5 des Plattensitzes 4 erfolgt durch gesonderte Schraubverbindungsmittel. Diese bestehen aus einer Schraube 17 und der Gegenhaltemutter 18, in welche die Schraube 17 eingeschraubt ist. Die Schraube 17 durchgreift das Plattenloch 19 der Lochplatte 3 und das Durchgangsloch 22 des Werkzeugschaftes 1. Sie greift mit ihrem Schraubgewinde 20 in das Muttergewinde 21 der Gegenhaltemutter 18 ein. Die Gegenhaltemutter 18 ist mit ihrem Kopf 24 unterhalb des Durchgangsloches 22 positioniert.

Wenn die Lochplatte 3 auf der Auflagefläche 5 des Plattensitzes 4 aufliegt, beaufschlagt die Schraube 17 mit ihrem Schraubenkopf 23 die Lochplatte 3 in Spannrichtung 15. Die Schraube 17 ist dabei in die Gegenhaltemutter 18 eingeschraubt und die Gegenhaltemutter 18 beaufschlagt mit ihrem Kopf 24 den Werkzeugschaft 1 auf seiner dem Lochplattensitz 4 abgewandten Seite entgegen dem Schraubdruck, also entgegen der Spannrichtung 15 der Schraube 17. Die Gegenhaltemutter 18 ist um die Schraubgewindeachse 38 undrehbar gegenüber dem Werkzeugschaft 1 gehalten. Die Gegenhaltemutter 18 liegt mit Spielsitz im Durchgangsloch 22 des Werkzeugschaftes 1 ein. Dieser Spielsitz ist insbesondere in oder entgegen der Zustellrichtung 9 wirksam. Folglich ist die Gegenhaltemutter 18 im Durchgangsloch 22 des Werkzeugschaftes 1 auch quer zur Lochachse 10 bzw. quer zur Durchgangsachse 25 sowohl in Zustellrichtung 9 der Lochplatte 3 als auch in Gegenrichtung dazu verschiebbar geführt.

Der Schraubmutterschaft 26 der Gegenhaltemutter 18 enthält in Form seiner beiden einander diametral gegenüberliegenden und zueinander parallelen Flankenebenen 27,28 zwei zueinander parallele Schwenkführungen. Diese Flankenebenen 27,28 tangieren entsprechende, zu ihnen parallel ausgerichtete Schwenkführungsebenen 29 bzw. 30 im Mantelbereich des Schaftdurchgangsloches 22. Die Schwenkführungsebenen 29,30 verlaufen vorzugsweise parallel zur Achse 10 des Durchgangsloches 22.

Der Schraubenkopf 23 weist etwa eine sich in Einschraubrichtung 15 verjüngende Kegelform auf. Er beaufschlagt mit seiner sich in Einschraubrichtung 15 verjüngenden, den Kegelmantel bildenden Kopfflanke 31 den Mantel des sich ebenfalls in Einschraubrichtung 15 hinsichtlich seines Innendurchmessers verjüngenden Plattenloches 19. Dabei ist mindestens eine der beiden gegenseitigen Kontaktflächen, nämlich die Oberfläche des Kegelmantels der Kopfflanke 31 und/oder der sich in Einschraubrichtung 15 hinsichtlich seines Innendurchmessers verjüngende Mantel 32 des Plattenloches 19 ballig, d.h. leicht konkav ausgestaltet. Das begünstigt in besonderer Weise die gewissermaßen schwimmende Schwenkbeweglichkeit der beiden Schraubverbindungsmittel 17,18 in der durch die Zustellrichtung 9 des Verstellmittels 11 und durch die Schraubgewindeachse 38 aufgespannten Schwenkbeweglichkeitsebene, die darüber hinaus beidseitig von den beiden Schwenkführungsebenen 29,30 des Durchgangsloches 22 im Werkzeugschaft flankiert ist.

Der Kopf 24 des Gegenhalters 18 beaufschlagt mit seiner Ringflanke 34 zwei diametral einander gegenüberliegend positionierte, in das Durchgangsloch 22 des Werkzeugschaftes 1 als Axialanschläge radial hineinstehende Anlagevorsprünge 35 von unten in einer der Spannrichtung 15 entgegengesetzten Anlagerichtung 33 (Fig. 2). Die Ringflanke 34 der Gegenhaltemutter 18 verjüngt sich in der der Spannrichtung 15 der Schraube 17 entgegengesetzten Anlagerichtung 33 der Gegenhaltemutter 18. Die Ringflanke 34 der Gegenhaltemutter 18 bildet etwa einen Kegelmantel. Mindestens die Ringflanke 34 der Gegenhaltemutter 18 oder die jeweilige Gegenflanken 36 der Anlagevorsprünge 35 sind ballig bzw. konvex ausgestaltet.

Die ballige Ausgestaltung der gegenseitigen Kontaktflächen mindestens einerseits des Schraubenkopfes 23 und des Lochmantels 32 der Lochplatte 3 und/oder auch andererseits des Kopfes 24 der Gegenhaltemutter 18 und der vom Kopf 24 beaufschlagten Anlagevorsprünge 35 des Durchgangsloches 22 im Werkzeugschaft 1 begünstigen eine selbsttätige Anpassung der Positionierung der Schraubverbindungsmittel (Schraube 17 und Gegenhaltemutter 18) durch deren entsprechende Schwenkung und/oder Drehung gegenüber dem Werkzeugschaft 1 mit der Folge einer weitgehenden Vermeidung von die Spannschraube 17 beaufschlagenden Biegebeanspruchungen.

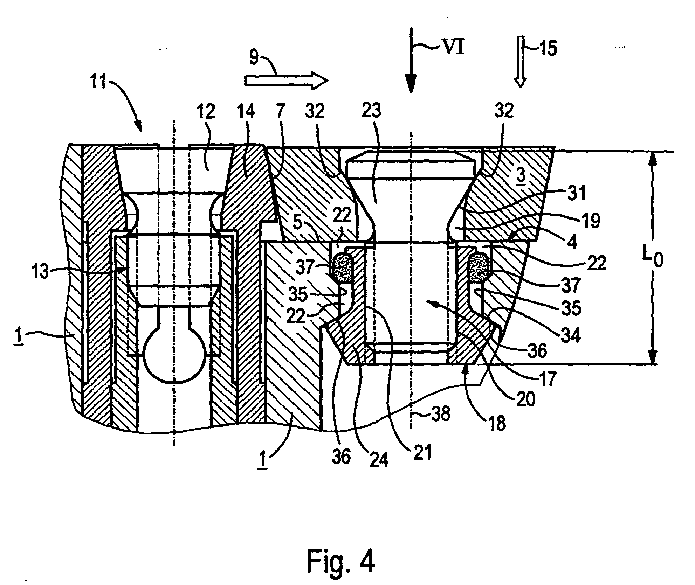

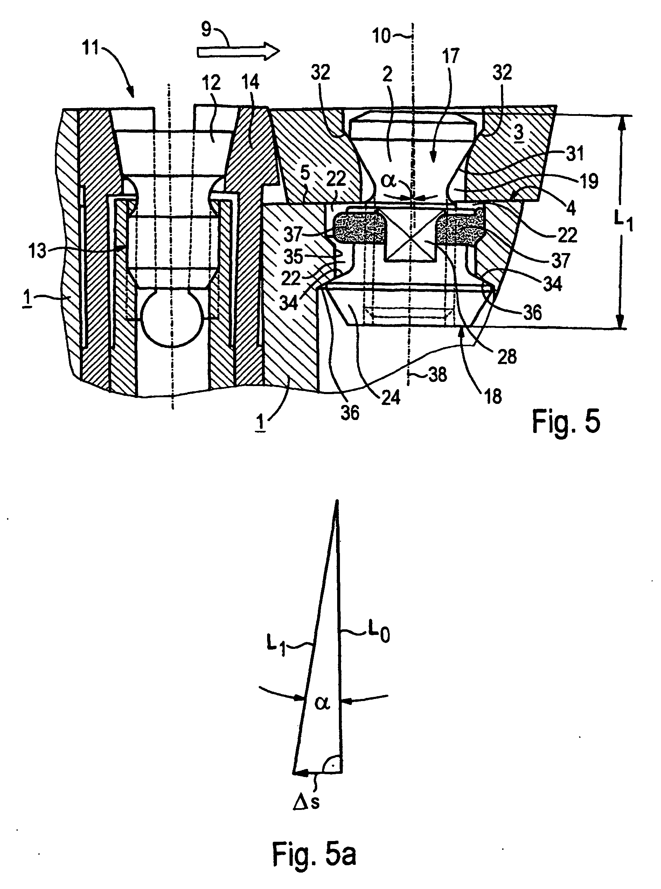

Fig. 5a zeigt die Spannungsverhältnisse zwischen der Schraube 17 und der Gegenhaltemutter 18 als Schraubverbindungsmittel einerseits und dem Werkzeugschaft 1, also seinen Anlagevorsprüngen 35 andererseits. Diese miteinander verspannten Teile und das Prinzip ihrer Zusammenwirkung ist besonders deutlich aus den Fig. 4 und 5 erkennbar. Im Ausgangszustand der Lochplattenspannung (Fig. 4) entspricht die Vorspannung zwischen den Schraubverbindungsmitteln (Schraube 17 und Gegenhaltemutter 18) einerseits und den Anlagevorsprüngen 35 andererseits dem Spannungsvektor L₀ (Fig. 4, 5a). Die durch die Stellzunge 14 der Zustelleinrichtung 11 in Zustellrichtung 9 eingeleitete Zustellung bewirkt eine Schwenkung der Schraubgewindeachse 38 der Schraubverbindungsmittel (Schraube 17) und Gegenhaltemutter 18 gegenüber der Plattenlochachse 10 um den Winkel α (Fig. 5). Damit vergrößert sich die Vorspannung der Schraubverbindungsmittel (Schraube 17, Gegenhaltmutter 18) gegenüber den Anlagevorsprüngen 35. Die vergrößerte Vorspannung entspricht dem Spannungsvektor L₁ (Fig. 5a). In Fig. 5a ist die Zustellbewegung bzw. der Zustellweg des unteren Endes der Schraubgewindeachse 38 (Fig. 5) durch den Positionierungsvektor Δs verdeutlicht.

Die Zustellungsbewegung vereinfachende Elemente sind oberhalb des Ringabsatzes positionierte, am Gegenhalter 24 fixierte Federglieder 37, welche entgegen der und/oder in Druckrichtung 9 der Zustelleinrichtung 11 komprimierbar bzw. expandierbar sind. Die Federglieder 37 sind gummiartige bzw. gummielastische Formteile, welche einzeln nach Art jeweils eines wulstartigen Ringsegmentes die außerhalb der beiden Flanken 27,28 liegenden Bereiche des Schaftes 26 der Gegenhaltemutter 18 ringsegmentartig umgeben.

Die beiden ringsegmentartigen Federglieder 37 bilden durch ihre Positionierung auf der dem Gegenhalterkopf 24 abgewandten Seite des Ringabsatzes 35 in Montagestellung außerdem eine Verliersicherung der Gegenhaltemutter 18 gegenüber dem Werkzeugschaft 1.

Zur Fixierung der Lochplatte 3 am Werkzeugschaft 1 wird die Lochplatte 3 zunächst auf den Plattensitz 4 gelegt und durch das Schraubverbindungsmittel am Werkzeugschaft 1 fixiert, welches aus Schraube 17 und Gegenhaltemutter 18 besteht. Dabei liegt die Schraube 17 mit ihrem Kopf 23 im Plattenloch 19 ein und steht mit ihrem das Schraubgewinde 20 tragenden Schaft durch das Durchgangsloch 22 des Werkzeugschaftes 1 hindurch. Ihr Schraubgewinde 20 ist so weit in das Muttergewinde 21 der von unten in das Durchgangsloch 22 des Werkzeugschaftes 1 mit Abstand zu den Anlagevorsprüngen 35 vorstehenden Gegenhaltemutter 18 eingeschraubt, bis die Lochplatte 2 wenigstens leicht reibschlüssig gegen den Plattensitz 4 verspannt ist (Fig. 4). Dann erfolgt die definitive Positionierung der Lochplatte 3 in Zustellrichtung 9 durch Einschrauben des Schraubzapfens 13 in den Werkzeugschaft 1. Dabei lenkt deren Stellkegelkopf 12 die an der benachbarten Freifläche der Lochplatte 3 anliegende Stellzunge 14 in Zustellrichtung 9 aus (Fig. 5). Die Zustellbewegung wird durch die nur leicht reibschlüssig, aber noch nicht definitiv festgezogene Schraubfixierung der Lochplatte 3 zwischen Schraubenkopf 23 und Gegenhalterkopf 24 nicht behindert. Die aus Schraube 17 und Gegenhaltemutter 18 gebildete Einheit lässt sich infolge der Balligkeit der Gegenhalterflanke 34 und der Gegenflanken 36 der Anlagevorsprünge 35 in Gemeinsamkeit mit der Balligkeit der Lochmantelfläche 32 der Lochplatte 3 und der Kopfflanke 31 des Schraubenkopfes 23 relativ ungehindert, also gewissermaßen schwimmend in eine reibschlüssige Endposition am Werkzeugschaft 1 ausschwenken. Das wird durch die Schwenkbeweglichkeit der gespannten Schraubverbindungsmittel 17,18 in Zustellrichtung 9 ermöglicht bzw. begünstigt. Die definitive Schraubfixierung kann nach der abschließenden Zustellung erfolgen.

## Patentansprüche

1. Zerspanungswerkzeug
- mit einem Werkzeugschaft (1) als Träger eines als Lochplatte (3) ausgebildeten Schneideinsatzes, insbesondere einer Lochwendeplatte aus einem harten Schneidwerkstoff, z.B. Hartmetall oder Oxidkeramik,
- mit einer quer zur Lochachse (10) in Zustellrichtung (9) auf die Lochplatte (3) wirksamen Zustelleinrichtung (11) als Verstellmittel für die Positionierung der Lochplatte (3) am Werkzeugschaft (1) und
- mit einer durch das Plattenloch (19) der Lochplatte hindurchstehenden Schraube (17), welche mit ihrem Schraubenkopf (23) die Lochplatte (3) gegen eine Auflagefläche (5) am Werkzeugschaft (1) verspannt und durch ein Durchgangsloch (22) des Werkzeugschaftes (1) hindurchstehend mit ihrem Schraubgewinde (20) in das Muttergewinde (21) einer Gegenhaltemutter (18) eingreift, **dadurch gekennzeichnet, dass**
-- die Gegenhaltemutter (18) auf der dem Lochplattensitz (4) abgewandten Seite entgegen dem Schraubdruck (15) und um die Schraubachse (10) undrehbar am Werkzeugschaft abgestützt ist,
-- wobei die gegenseitigen Anlageflächen von Schraubenkopf (23)und Lochplatte (3) einerseits und von Gegenhaltemutter (18) und Werkzeugschaft (1) andererseits durch ihre Formgebung eine der Zustellbewegung folgende Beweglichkeit, insbesondere Schwenkbeweglichkeit der miteinander verspannten Schraubverbindungsmittel Schraube (17) und Gegenhaltemutter (18) gegenüber dem Werkzeugschaft (1) und gegenüber der Lochplatte (3) ermöglichen.

2. Zerspanungswerkzeug nach Anspruch 1,
**gekennzeichnet durch**
eine etwa **durch** die Zustellrichtung (9) des Verstellmittels (11) und die Schraubgewindeachse (10) aufgespannte Schwenkbeweglichkeitsebene.

3. Zerspanungswerkzeug nach Anspruch 1 oder 2,
**dadurch gekennzeichnet,**
**dass** der Schraubenkopf (23) mit seinen sich in Einschraubrichtung (15) verjüngenden Flanken (31) den Mantel des sich mit ihrem Innendurchmesser in Einschraubrichtung (15) verjüngenden Plattenloches (19) beaufschlagt, wobei mindestens eine der gegenseitigen Kontaktflächen (Flanke 31; Mantel des Plattenloches 19) ballig ausgestaltet ist.

4. Zerspanungswerkzeug nach einem der Ansprüche 1 bis 3,
**dadurch gekennzeichnet,**
**dass** der Kopf (24) der Gegenhaltemutter (18) mit seinen sich in Aufschraubrichtung (33) des Muttergewindes (21) verjüngenden Umfangsflanken (34) einen Ringabsatz (35) des Durchgangsloches (22) des Werkzeugschaftes (1) beaufschlagt, wobei mindestens eine der gegenseitigen Kontaktflächen (34,36) ballig ausgestaltet ist.

5. Zerspanungswerkzeug nach einem der Ansprüche 1 bis 4,
**dadurch gekennzeichnet,**
**dass** die Gegenhaltemutter (18) mit Spielsitz vertieft im Durchgangsloch (22) des Werkzeugschaftes (1) einliegt.

6. Zerspanungswerkzeug nach einem der Ansprüche 1 bis 5,
**dadurch gekennzeichnet,**
**dass** die Gegenhaltemutter (18) im Durchgangsloch (22) des Werkzeugschaftes (1) quer zu ihrer Spannrichtung (33) in oder entgegen der Zustellrichtung (9) der Lochplatte (3) verschiebbar gelagert ist.

7. Zerspanungswerkzeug nach Anspruch 6,
**dadurch gekennzeichnet,**
**dass** mindestens eine zur Schraubgewindeachse (10) etwa parallele ebene Flanke (27,28) der Gegenhaltemutter (18) eine Schwenkführungsebene (29,30) tangiert, welche einen Mantelbereich des Durchgangsloches (22) bildet.

8. Zerspanungswerkzeug nach Anspruch 4,
**dadurch gekennzeichnet,**
**dass** die am Kopf (24) der Gegenhaltemutter (18) anliegenden Gegenflanken (36) von in das Durchgangsloch (22) etwa radial hineinstehenden Anlagevorsprüngen (35) in Anlagerichtung (33) des Muttergewindes (21) der Gegenhaltemutter (18) zur Mittelachse des Durchgangsloches (22) und zur Plattenlochachse (10) hin geneigt sind.

9. Zerspanungswerkzeug nach einem der vorhergehenden Ansprüche,
**gekennzeichnet durch**
ein die Gegenhaltemutter (18) entgegen der und/oder in Druckrichtung (9) der Zustelleinrichtung (11) beaufschlagendes Federglied (37).

10. Zerspanungswerkzeug nach Anspruch 9,
**dadurch gekennzeichnet,**
**dass** das Federglied (37) mit seinem dem Kopf (24) der Gegenhaltemutter (18) abseitigen Ende am Mantel des Durchgangsloches (22) des Werkzeugschaftes (1) abgestützt ist.

11. Zerspanungswerkzeug nach Anspruch 9 oder 10,
**gekennzeichnet durch**
ein gummiartiges Formteil als Federglied (37).

12. Zerspanungswerkzeug nach einem der Ansprüche 9 bis 11,
**dadurch gekennzeichnet,**
**dass** das Federglied (37) etwa nach Art etwa eines aufgesetzten Ringes oder Ringsegmentes an der Gegenhaltemutter (18) fixiert ist.

13. Zerspanungswerkzeug nach einem der Ansprüche 9 bis 12,
**dadurch gekennzeichnet,**
**dass** das Federglied (37) auf der dem Kopf (24) der Gegenhaltemutter (18) abgewandten Seite der Anlagevorsprünge (35) im Durchgangsloch (22) des Werkzeugschaftes (1) positioniert ist.

## Claims

1. Cutting tool
- having a tool shank (1) as carrier of a cutting insert, designed as a holed insert (3), in particular a holed indexable insert, made of a hard cutting material, e.g. carbide or oxide ceramic,
- having an infeed device (11) which is effective on the holed insert (3) transversely to the hole axis (10) in the infeed direction (9) and is intended as adjusting means for the positioning of the holed insert (3) on the tool shank (1), and
- having a screw (17) which projects through the insert hole (19) of the holed insert and which, with its screw head (23), restrains the holed insert (3) against a locating surface (5) on the tool shank (1) and, projecting through a through-hole (22) of the tool shank (1), engages by means of its screw thread (20) in the nut thread (21) of a backing nut (18), **characterized in that**
- the backing nut (18) is supported on the tool shank, on the side remote from the holed-insert seat (4), against the screwing pressure (15) and in a rotationally fixed manner about the screwing axis (10),
- the mutual bearing surfaces of screw head (23) and holed insert (3), on the one hand, and of backing nut (18) and tool shank (1), on the other hand, due to their shaping, enabling the screwed-connection means restrained together - screw (17) and backing nut (18) - to follow the infeed movement and move, in particular pivot, relative to the tool shank (1) and relative to the holed insert (3).

2. Cutting tool according to Claim 1, **characterized by** a pivoting plane defined, for example, by the infeed direction (9) of the adjusting means (11) and by the screw-thread axis (10).

3. Cutting tool according to Claim 1 or 2, **characterized in that** the screw head (23), with its flanks (31), which taper in the screw-in direction (15), acts upon the lateral surface of the insert hole (19) tapering with its inside diameter in the screw-in direction (15), at least one of the mutual contact surfaces (flank 31; lateral surface of the insert hole 19) being of crowned design.

4. Cutting tool according to one of Claims 1 to 3, **characterized in that** the head (24) of the backing nut (18), with its circumferential flanks (34), which taper in the screw-on direction (33) of the nut thread (21), acts upon an annular step (35) of the through-hole (22) of the tool shank (1), at least one of the mutual contact surfaces (34, 36) being of crowned design.

5. Cutting tool according to one of Claims 1 to 4, **characterized in that** the backing nut (18) rests with a clearance fit in a recessed position in the through-hole (22) of the tool shank (1).

6. Cutting tool according to one of Claims 1 to 5, **characterized in that** the backing nut (18) is mounted in the through-hole (22) of the tool shank (1) in such a way as to be displaceable transversely to its clamping direction (33) in or against the infeed direction (9) of the holed insert (3).

7. Cutting tool according to Claim 6, **characterized in that** at least one flat flank (27, 28), approximately parallel to the screw-thread axis (10), of the backing nut (18) is tangent to a pivot-guide plane (29, 30) which forms a lateral-surface region of the through-hole (22).

8. Cutting tool according to Claim 4, **characterized in that** the mating flanks (36), bearing against the head (24) of the backing nut (18), of bearing projections (35) projecting approximately radially into the through-hole (22) are inclined in the bearing direction (33) of the nut thread (21) of the backing nut (18) towards the centre axis of the through-hole (22) and towards the insert hole axis (10).

9. Cutting tool according to one of the preceding claims, **characterized by** a spring member (37) acting upon the backing nut (18) against and/or in the pressure direction (9) of the infeed device (11).

10. Cutting tool according to Claim 9, **characterized in that** spring member (37), with its end remote from the head (24) of the backing nut (18), is supported on the lateral surface of the through-hole (22) of the tool shank (1).

11. Cutting tool according to Claim 9 or 10, **characterized by** a rubber-like shaped part as spring member (37).

12. Cutting tool according to one of Claims 9 to 11, **characterized in that** the spring member (37) is fixed on the backing nut (18) roughly in the manner of a mounted ring or ring segment.

13. Cutting tool according to one of Claims 9 to 12, **characterized in that** the spring member (37) is positioned in the through-hole (22) of the tool shank (1) on that side of the bearing projections (35) which is remote from the.head (24) of the backing nut (18).

## Revendications

1. Outil d'enlèvement de matière, comprenant :
- une tige d'outil (1) à titre de support pour un insert de coupe formé comme une plaque à trous (3), en particulier comme une plaque inversible à trous en matériau de coupe dur, comme par exemple un métal dur ou une céramique à base d'oxyde,
- un dispositif d'approche (11) agissant sur la plaque à trous (3) en direction d'approche perpendiculairement à l'axe des trous (10), à titre d'organe de déplacement pour le positionnement de la plaque à trous (3) sur la tige (1) de l'outil, et
- une vis (17) traversant le trou (19) de la plaque à trous, laquelle serre au moyen de sa tête de vis (23) la plaque à trous (3) contre une surface d'appui (5) sur la tige (1) de l'outil, et qui, après avoir traversé un trou de passage (22) de la tige (1) de l'outil, s'engage par son pas de vis (20) dans le pas de vis (21) d'un contre-écrou de blocage (18),
**caractérisé en ce que** :
-- le contre-écrou (18) s'appuie sur la tige de l'outil sans possibilité de rotation autour de l'axe (10) de la vis, sur le côté détourné du siège (4) de la plaque à trous et à l'encontre de la pression de vissage (15), et
-- les surfaces d'appui réciproques de la tête de vis (23) et de la plaque à trous (3) d'une part, et du contre-écrou (18) et de la tige (1) de l'outil d'autre part, permettent grâce à leur conformation une mobilité suivant le mouvement d'approche, en particulier une mobilité en pivotement des organes de liaison à vis serrés l'un avec l'autre, que sont la vis (17) et le contre-écrou (18), par rapport à la tige (1) de l'outil et par rapport à la plaque à trous (3).

2. Outil d'enlèvement de matière selon la revendication 1, **caractérisé par** un plan de mobilité en pivotement défini approximativement par la direction d'approche (9) des organes de déplacement (11) et par l'axe (10) de la vis.

3. Outil d'enlèvement de matière selon l'une ou l'autre des revendications 1 et 2, **caractérisé en ce que** la tête de vis (23) attaque, par ses flancs (31) qui vont en se rétrécissant dans la direction de vissage (15), l'enveloppe du trou (19) de plaque dont le diamètre intérieur va en se rétrécissant dans la direction de vissage (15), et dans lequel l'une au moins des surfaces de contact réciproques (flancs 31 ; enveloppe du trou (19) de plaque) est conçue sous forme bombée.

4. Outil d'enlèvement de matière selon l'une des revendications 1 à 3, **caractérisé en ce que** la tête (24) du contre-écrou (18) attaque, par ses flancs périphériques (34) qui vont en se rétrécissant dans la direction de vissage (33) du pas de vis (21) de l'écrou, un talon annulaire (35) du trou de passage (22) de la tige (1) de l'outil, et dans lequel l'une au moins des surfaces de contact réciproques (34, 36) est conçue sous forme bombée.

5. Outil d'enlèvement de matière selon l'une des revendications 1 à 4, **caractérisé en ce que** le contre-écrou (18) repose avec jeu en renfoncement dans le trou de passage (22) de la tige (1) de l'outil.

6. Outil d'enlèvement de matière selon l'une des revendications 1 à 5, **caractérisé en ce que** le contre-écrou (18) est monté avec possibilité de translation dans le trou de passage (22) de la tige (1) de l'outil transversalement à sa direction de serrage (33) dans la direction d'approche (9) de la plaque à trous (3) ou en direction opposée.

7. Outil d'enlèvement de matière selon la revendication 6, **caractérisé en ce qu'**au moins un flanc plan (27, 28) du contre-écrou (18) approximativement parallèle à l'axe de la vis (10) est tangent à un plan de guidage de pivotement (29, 30) qui forme une zone enveloppe du trou de passage (22).

8. Outil d'enlèvement de matière selon la revendication 4, **caractérisé en ce que** les flancs antagonistes (36), appliqués contre la tête (24) du contre-écrou (18), de saillies d'appui (35) qui dépassent approximativement radialement dans le trou de passage (22) sont inclinés dans la direction d'appui (33) du pas de vis (21) du contre-écrou (18) vis-à-vis de l'axe médian du trou de passage (22) et vis-à-vis de l'axe (10) du trou de plaque.

9. Outil d'enlèvement de matière selon l'une des revendications précédentes, **caractérisé par** un organe à ressort (37) qui sollicite le contre-écrou (18) en sens opposé et/ou dans le même sens que la direction de pressage (9) du dispositif d'approche (11).

10. Outil d'enlèvement de matière selon la revendication 9, **caractérisé en ce que** l'organe à ressort (37) s'appuie par son extrémité détournée de la tête (24) du contre-écrou (18) contre l'enveloppe du trou traversant (22) de la tige (1) de l'outil.

11. Outil d'enlèvement de matière selon l'une ou l'autre des revendications 9 et 10, **caractérisé en ce que** l'organe à ressort (37) est une pièce moulée analogue à du caoutchouc.

12. Outil d'enlèvement de matière selon l'une des revendications 9 à 11, **caractérisé en ce que** l'organe à ressort (37) est fixé sur le contre-écrou (18) approximativement à la manière d'une bague ou d'un segment annulaire rapporté.

13. Outil d'enlèvement de matière selon l'une des revendications 9 à 12, **caractérisé en ce que** l'organe à ressort (37) est positionné dans le trou de passage (22) de la tige (1) de l'outil sur le côté des saillies d'appui (35) détourné de la tête (24) du contre-écrou (18).
